# EUROPÄISCHE PATENTSCHRIFT

(11) **EP 1 264 528 B1**
(45) Veröffentlichungstag und Bekanntmachung des Hinweises auf die Patenterteilung: **13.12.2006**
(21) Anmeldenummer: 02450131.4
(22) Anmeldetag: 04.06.2002
(51) Int. Cl.: A01D 45/02

(54) **Schneidelement für eine Pflückwalze zum Ernten von stengeligem Erntegut**
Cutting element for a snapping roll for harvesting stalk crops
Elément de coupe pour rouleau cueilleur pour récolter des récoltes à tige

(30) Priorität: 05.06.2001 AT 8712001
(43) Veröffentlichungstag der Anmeldung: 11.12.2002
(73) Patentinhaber: Busatis GmbH, 3251 Purgstall (AT)
(72) Erfinder:
(74) Vertreter: Puchberger, Peter

(56) Entgegenhaltungen:
- EP-A- 0 761 089
- EP-A- 0 829 198
- EP-A- 1 040 746
- WO-A-00/30427
- US-A- 2 571 865
- US-A- 3 635 271
- US-A- 6 067 784

## Beschreibung

Die Erfindung betrifft ein Schneidelement für eine Pflückwalze zum Ernten von stengeligem Erntegut, welches Schneidelement mindestens eine Schneidkante aufweist und im Bereich dieser Schneidkante mit einer Hartstoffbeschichtung versehen ist und eine Pflückwalze zum Ernten von stengeligem Erntegut, mit mindestens einem solchen Schneidelement.

Es sind Erntemaschinen bekannt, bei denen das stengelige Erntegut, z.B. Maispflanzen, während der Vorwärtsfahrt zwei Pflückwalzen zugeführt wird, die im allgemeinen parallel zueinander und gegenläufig angetrieben angeordnet sind. Von diesem Pflückwalzenpaar wird der Stengel zerschnitten und gleichzeitig nach unten gezogen, wobei der untere, starke, verholzte Teil des Stengels im in Fahrtrichtung vorderen Endbereich der Pflückwalzen geschnitten wird, und der obere, dünnere, nicht so harte Bereich des Stengels im mittleren und gegebenenfalls hinteren Bereich der Pflückwalzen zerschnitten wird. Es versteht sich daher, daß es an jenen Enden der Pflückwalzen, die in Fahrtrichtung vorne liegen zu stärkeren Abnützungen der Schneidenbereiche der Pflückwalzen kommt. Da das Austauschen der gesamten Pflückwalze ein zeitaufwendiger Vorgang ist und dabei auch nicht verschlissene Bereiche der Pflückwalze ausgetauscht werden müssen, wird seit längerem nach Lösungen gesucht, die das Problem der Abnützung mit weniger Zeit- und Materialaufwand beheben.

In der EP 943 229 A1 wird vorgeschlagen die Pflückwalze in axialer Richtung aus mehreren miteinander verbindbaren, separaten Teilstücken zu bilden, sodaß nur mehr jene Teilstücke ausgetauscht werden müssen, die bereits starke Abnützungen zeigen. Ferner können die Teilstücke unterschiedlich strukturiert sein, um sie besser an die unterschiedlichen Pflanzenteile anzupassen. Schließlich wird eine konische Ausbildung der Pflückwalzen vorgeschlagen, die der unterschiedlichen Dicke der Pflanzenstengel in unterschiedlichen Höhen Rechnung trägt. Diese Lösungen stellen jedoch immer noch einen erheblichen Materialaufwand dar und machen die Herstellung der Pflückwalzen aufwendiger und teurer.

In der DE 199 14 321 wird vorgeschlagen, daß die Schneidelemente lösbar mit dem Walzengrundkörper verbunden sind und mehrteilig ausgeführt sind. Somit müssen nur mehr jene Schneidelemente ausgetauscht werden, die sehr starke Abnützungen aufweisen. Der Materialaufwand ist damit stark minimiert. Zusätzlich wird eine Härtung der Schneidkante der Schneidelemente z.B. durch Oberflächenbeschichtung bzw. Hartmetall vorgeschlagen. Die Herstellung und Wartung dieser Pflückwalzen ist jedoch kompliziert, zeitaufwendig und daher teuer.

Ausgehend von diesem Stand der Technik ist es Aufgabe der vorliegenden Erfindung, eine Möglichkeit zu finden, bei geringem Materialaufwand und geringem Herstellungs- und Wartungsaufwand Pflückwalzen zum Ernten von stengeligem Erntegut zu betreiben.

Diese Aufgabe wird dadurch gelöst, daß bei einem erfindungsgemäßen Schneidelement für eine Pflückwalze zum Ernten von stengeligem Erntegut, welches Schneidelement mindestens eine Schneidkante aufweist und im Bereich dieser Schneidkante mit einer Hartstoffbeschichtung versehen ist, die Dicke der Hartstoffbeschichtung über die Länge des Schneidelementes variiert und an wenigstens einem Ende des Schneidelementes dicker ist als im mittleren Bereich des Schneidelementes und daß das Schneidelement mit seinem die dickere Hartsstoffbeschichtung aufweisenden Ende in Fahrtrichtung nach vorne an der Pflückwalze montierbar ist.

Die erfindungsgemäße Aufgabe wird auch durch eine Pflückwalze zum Ernten von stengeligem Erntegut, mit mindestens einem Schneidelement, das im Bereich seiner Schneidkante mit einer Hartstoffbeschichtung versehen ist, gelöst, wobei die Dicke der Hartstoffbeschichtung über die Länge des Schneidelementes variiert und an wenigstens einem Ende des Schneidelementes dicker ist als im mittleren Bereich des Schneidelementes und wobei das Schneidelement mit seinem die dickere Hartstoffbeschichtung aufweisenden Ende in Fahrtrichtung nach vorne an der Pflückwalze angeordnet ist.

Die größere Dicke der Hartstoffbeschichtung am vorderen, am stärksten beanspruchten Ende des Schneidelementes bewirkt eine noch längere Standzeit und man kann ohne Materialverschwendung bei richtiger Dimensionierung der Dicke der Hartstoffbeschichtung über die Länge des Schneidelementes nach gegebener Zeit das gesamte Schneidelement austauschen, da dieses nach dieser Zeit über seine gesamte Länge Abnützungen aufweist, die den Austausch in allen Bereichen rechtfertigt. Die Notwendigkeit das Schneidelement zu unterteilen entfällt, wodurch die Montage und die Wartung der Pflückwalze vereinfacht, verkürzt und kostengünstiger wird.

Erfindungsgemäß kann das Verhältnis der geringsten Dicke zur größten Dicke der Hartstoffbeschichtung zwischen 1:1,5 und 1:5, vorzugsweise bei 1:2,5 liegen.

Dabei kann die Hartstoffbeschichtung aus mehreren übereinander angeordneten Schichten mit in Längsrichtung des Schneidelementes gleichbleibender Dicke bestehen und die Anzahl der Schichten über die Länge des Schneidelementes variieren. So wird die Herstellung der variierenden Dicke der Hartstoffbeschichtung einfach. Selbstverständlich ist jedoch auch eine sich kontinuierlich verändernde Dicke der Hartstoffbeschichtung denkbar.

Ferner kann die Hartstoffbeschichtung eine am Grundkörper oder in einer Nut im Grundkörper des Schneidelementes angebrachte Hartstoffleiste mit über die Länge variierender Dicke sein, die z.B. an- oder eingeklebt ist.

Vorzugsweise ist die Hartstoffbeschichtung an beiden Enden des Schneidelementes dicker als im mittleren Bereich des Schneidelementes und das Schneidelement ist wahlweise mit seinem einen oder seinem anderen Ende in Fahrtrichtung nach vorne an der Pflückwalze montierbar, sodaß das Schneidelement um seine Querachse gedreht werden kann, wenn das eine Ende starke Abnützungen zeigt, und der Materialaufwand noch besser genutzt werden kann.

Bei der erfindungsgemäßen Pflückwalze kann nach einer besonderen Ausführungsform die Schneidleiste mit der Pflückwalze einstückig sein und die Pflückwalze mit dem eine dickere Hartstoffbeschichtung aufweisenden Ende in Fahrtrichtung montierbar sein. In diesem Fall ergibt sich bei einem größeren Aufwand an kostengünstigem Grundmaterial ein noch geringerer Montageaufwand.

Weiters kann vorzugsweise das Schneidelement wie an sich bekannt zwei parallele Schneidkanten aufweisen und im Bereich dieser Schneidkanten mit Hartstoffbeschichtungen versehen sein, wobei erfindungsgemäß die Hartstoffbeschichtungen über die Länge des Schneidelementes variieren und an wenigstens einem Ende des Bereiches jeder Schneidkante dicker sind als im mittleren Bereich des Schneidelementes und das Schneidelement kann mit jedem seiner die dickere Hartstoffbeschichtung aufweisenden Enden in Fahrtrichtung nach vorne an der Pflückwalze montierbar sein. Damit kann das Schneidelement um seine Längsachse gedreht werden und ein und dasselbe Schneidelement kann doppelt solange in Verwendung sein.

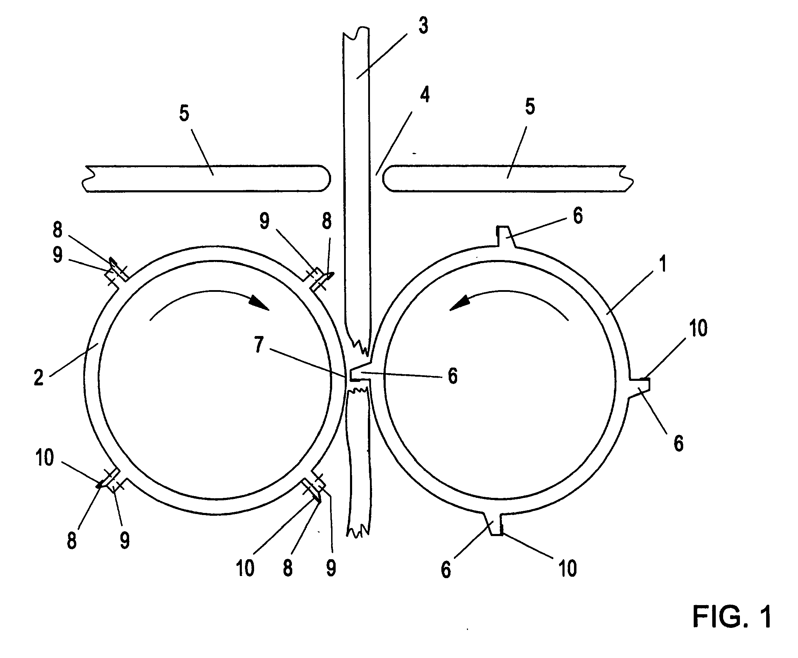

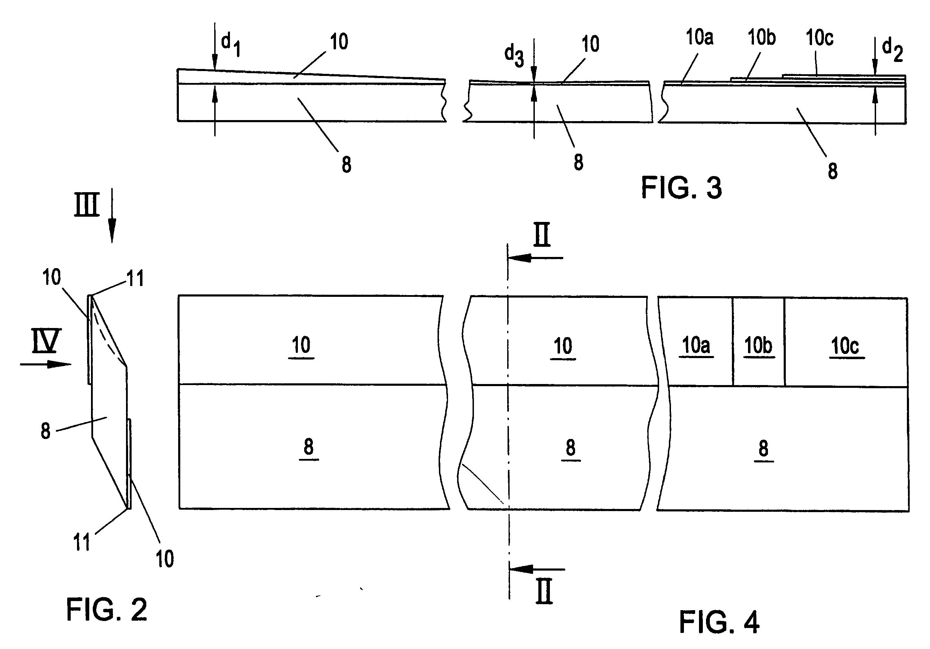

Nunmehr soll anhand der beiliegenden Zeichnungen die Erfindung zum besseren Verständnis nochmals erläutert werden, wobei die Fig.1 ein Pflückwalzenpaar beim Schneiden eines stengeligen Ernteguts im Querschnitt, Fig.2 ein erfindungsgemäßes Schneidelement im Querschnitt, Fig.3 das Schneidelement in einer Ansicht gemäß Pfeil III und Fig.4 das Schneidelement in einer Ansicht gemäß Pfeil IV in Fig.2 zeigt.

Fig.1 zeigt eine Pflückwalze 1 und eine Pflückwalze 2 die sich gegensinnig drehen. Bei der Vorwärtsfahrt der Pflückvorrichtung wird das stengelige Erntegut durch einen Pflückspalt 4 zwischen zwei Pflückplatten 5 in den Bereich zwischen den in Fahrtrichtung gesehen vorne liegenden Enden der Pflückwalzen 1 und 2 gebracht, wo jeder Stengel 3 im Bereich seines unteren, dicken, möglicherweise verholzten Teils erfaßt, geschnitten und gleichzeitig nach unten gezogen wird. Beim Abschneiden und Herunterziehen wirkt jeweils ein Schneidelement 6 an einer Pflückwalze 1 mit dem Zwischenschneidenbereich 7 der anderen Pflückwalze 2 zusammen. Während des Transportes von den vorderen Enden der Pflückwalzen 1 und 2 in Richtung der hinteren Enden derselben, wird der Stengel 3, der nach oben hin zunehmend dünner und leichter zu durchtrennen wird, abwechselnd von einem Schneidelement 6 der einen Pflückwalze 1 und von einem Schneidelement 8 der anderen Pflückwalze 2 durchtrennt und nach unten gezogen, wobei jeweils die andere Pflückwalze 1, 2 als Gegenfläche dient.

In der Fig.1 sind zwei verschiedene Ausführungsvarianten für die Pflückwalzen 1, 2 gezeigt. Bei der Pflückwalze 1 sind die hartstoffbeschichteten Schneidelemente 6 einstückig mit der Pflückwalze 1 gefertigt. Bei der Pflückwalze 2 sind einstückig radiale Ansätze 9 vorgesehen, an denen die Schneidelemente 8 z.B. durch Schrauben befestigt sind, die ein Austauschen der abgenutzten Schneidelemente 8 erlauben. Sowohl die Schneidelemente 6 als auch die Schneidelemente 8 weisen eine Hartstoffbeschichtung 10 in ihrem Schneidenbereich auf.

Fig.2 zeigt im Querschnitt ein Schneidelement 8 mit jeweils einer Hartstoffbeschichtung 10 im Bereich seiner Schneidkanten 11. Strichliert sind die Abnützungen des weicheren Grundmaterials des Schneidelementes 8 eingezeichnet, die zu einem Selbstschärfeffekt führen. Ist das Schneidelement 8 im Bereich einer seiner Schneidkanten 11 stark abgenutzt, kann das Schneidelement 8 von der Pflückwalze 2 gelöst werden, um seine Längsachse um 180° gedreht werden, und wieder an der Pflückwalze 2 montiert werden und die Vorrichtung ist einsatzbereit bis das Schneidelement 8 auch im Bereich der anderen Schneidkante 11 abgenutzt ist und das Schneidelement 8 vollständig ausgetauscht werden muß.

Die Fig.3 zeigt eine Draufsicht auf die Schneide gemäß Pfeil III in Fig.2 und Fig.4 zeigt eine Draufsicht auf die die Harstoffbeschichtung 10 tragende Oberfläche des Schneidelementes 8 gemäß Pfeil IV in Fig.2. Deutlich erkennt man, daß die Dicke d1, d2 der Hartstoffbeschichtung 10 am Rand des Schneidelementes 8 größer ist als die Dikke d3 der Hartstoffbeschichtung 10 im mittleren Bereich des Schneidelementes 8. Im linken Teil der Darstellungen der Figuren 3 und 4 nimmt die Dicke der Hartstoffbeschichtung 10 kontinuierlich vom Rand zur Mitte des Schneidelementes 8 hin ab. Im rechten Teil der Darstellungen hingegen ist eine stufenförmige Veränderung der Dicke d2 der Hartstoffbeschichtung 10 verwirklicht, indem mehrere Hartstoffschichten 10a, 10b, 10c übereinander aufgebracht sind, deren Dicke in Längsrichtung des Schneidelementes 8 jeweils gleichbleibend ist. Die Anzahl der Hartstoffschichten ist am Rand des Schneidelementes 8 größer als gegen die Mitte des Schneidelementes 8 hin.

Die erfindungsgemäßen Schneidelemente 8 haben im allgemeinen eine Länge von 300 bis 700 mm. Die Dicke d1 -d3 der Hartstoffbeschichtung 10 liegt im allgemeinen zwischen 0,1 und 1 mm, wobei die Hartstoffschicht z.B. aus einer Matrix mit einer Härte von 500-800 HV mit eingelagerten Hartstoffpartikel mit einer Härte von >1400 HV gebildet werden kann.

## Patentansprüche

1. Schneidelement für eine Pflückwalze zum Ernten von stengeligem Erntegut, welches Schneidelement mindestens eine Schneidkante aufweist und im Bereich dieser Schneidkante mit einer Hartstoffbeschichtung versehen ist, **dadurch gekennzeichnet, daß** die Dicke (d1, d2, d3) der Hartstoffbeschichtung (10) über die Länge des Schneidelementes (8) variiert und an wenigstens einem Ende des Schneidelementes (8) dicker ist als im mittleren Bereich des Schneidelementes (8) und daß das Schneidelement (8) mit seinem die dickere Hartstoffbeschichtung (10) aufweisenden Ende in Fahrtrichtung nach vorne an der Pflückwalze (1, 2) montierbar ist.

2. Schneidelement nach Anspruch 1, **dadurch gekennzeichnet, daß** die Hartstoffbeschichtung (10) an beiden Enden des Schneidelementes (8) dicker ist als im mittleren Bereich des Schneidelementes (8) und daß das Schneidelement (8) wahlweise mit seinem einen oder seinem anderen Ende in Fahrtrichtung nach vorne an der Pflückwalze (1, 2) montierbar ist.

3. Schneidelement nach einem der Ansprüche 1 oder 2, **dadurch gekennzeichnet, daß** das Schneidelement (8) zwei parallele Schneidkanten (11) aufweist und im Bereich dieser Schneidkanten (11) mit Hartstoffbeschichtungen (10) versehen ist, die über die Länge der Schneidkanten (11) variieren und an wenigstens einem Ende des Bereiches jeder Schneidkante (11) dicker ist als im mittleren Bereich des Schneidelementes (8) und daß das Schneidelement (8) mit jedem seiner die dickere Hartstoffbeschichtung (10) aufweisenden Enden in Fahrtrichtung nach vorne an der Pflückwalze (1, 2) montierbar ist.

4. Schneidelement nach einem der Ansprüche 1 bis 3, **dadurch gekennzeichnet, daß** das Verhältnis der geringsten Dicke (d3) zur größten Dicke (d1, d2) der Hartstoffbeschichtung (10) zwischen 1:1,5 und 1:5, vorzugsweise bei 1:2,5 liegt.

5. Schneidelement nach einem der Ansprüche 1 bis 4, **dadurch gekennzeichnet, daß** die Hartstoffbeschichtung (10) aus mehreren übereinander angeordneten Schichten (10a, 10b, 10c) mit in Längsrichtung des Schneidelementes (8) gleichbleibender Dicke besteht und daß die Anzahl der Schichten (10a, 10b, 10c) über die Länge des Schneidelementes (8) variiert.

6. Schneidelement nach einem der vorhergehenden Ansprüche **dadurch gekennzeichnet, daß** die Hartstoffbeschichtung (10) eine am Grundkörper oder in einer Nut im Grundkörper des Schneidelementes (8) angebrachte Hartstoffleiste (10) mit über die Länge variierender Dicke (d1, d2, d3) ist.

7. Pflückwalze zum Ernten von stengeligem Erntegut, mit mindestens einem Schneidelement, das im Bereich seiner Schneidkante mit einer Hartstoffbeschichtung versehen ist, **dadurch gekennzeichnet, daß** die Dicke (d1, d2, d3) der Hartstoffbeschichtung (10) über die Länge des Schneidelementes (6, 8) variiert und an wenigstens einem Ende des Schneidelementes (6, 8) dicker ist als im mittleren Bereich des Schneidelementes (6, 8) und daß das Schneidelement (6, 8) mit seinem die dickere Hartstoffbeschichtung (10) aufweisenden Ende in Fahrtrichtung nach vorne an der Pflückwalze (1, 2) angeordnet ist.

8. Pflückwalze nach Anspruch 7, **dadurch gekennzeichnet, daß** die Hartstoffbeschichtung (10) an beiden Enden des Schneidelementes (8) dicker ist als im mittleren Bereich des Schneidelementes (8) und daß das Schneidelement (8) wahlweise mit seinem einen oder seinem anderen Ende in Fahrtrichtung nach vorne an der Pflückwalze (2) montierbar ist.

9. Pflückwalze nach Anspruch 7, **dadurch gekennzeichnet, daß** das Schneidelement (6) mit der Pflückwalze (1) einstückig ist und daß die Pflückwalze (1) mit dem eine dikkere Hartstoffbeschichtung (10) aufweisenden Ende in Fahrtrichtung nach vorne montierbar ist.

10. Pflückwalze nach Anspruch 7 oder 8, wobei das Schneidelement zwei parallele Schneidkanten aufweist und im Bereich dieser Schneidkanten mit Hartstoffbeschichtungen versehen ist, **dadurch gekennzeichnet, daß** die Hartstoffbeschichtungen (10) über die Länge der Schneidkanten (11) variieren und an wenigstens einem Ende des Bereiches jeder Schneidkante (11) dicker sind als im mittleren Bereich des Schneidelementes (8) und daß das Schneidelement (8) mit jedem seiner die dickere Hartstoffbeschichtung (10) aufweisenden Enden in Fahrtrichtung nach vorne an der Pflückwalze (2) montierbar ist.

11. Pflückwalze nach einem der Ansprüche 7 bis 10, **dadurch gekennzeichnet, daß** das Verhältnis der geringsten Dicke (d3) zur größten Dicke (d1, d2) der Hartstoffbeschichtung (10) zwischen 1:1,5 und 1:5, vorzugsweise bei 1:2,5 liegt.

12. Pflückwalze nach einem der Ansprüche 7 bis 11, **dadurch gekennzeichnet, daß** die Hartstoffbeschichtung (10) aus mehreren übereinander angeordneten Schichten (10a, 10b, 10c) mit in Längsrichtung des Schneidelementes (8) gleichbleibender Dicke besteht und daß die Anzahl der Schichten (10a, 10b, 10c) über die Länge des Schneidelementes (8) variiert.

13. Pflückwalze nach einem der Ansprüche 7 bis 12, **dadurch gekennzeichnet, daß** die Hartstoffbeschichtung (10) eine am Grundkörper oder in einer Nut im Grundkörper des Schneidelementes (8) angebrachte Hartstoffleiste (10) mit über die Länge variierender Dicke (d1, d2, d3) ist.

## Claims

1. Cutting element for a snapping roll for harvesting stalk crops, which cutting element has at least one cutting edge and in the region of this cutting edge is provided with a hard material layer, **characterized in that** the thickness (d1, d2, d3) of the hard material layer (10) varies over the length of the cutting element (8) and is thicker at at least one end of the cutting element (8) than in the middle region of the cutting element (8) and **in that** the cutting element (8) with its end having the thicker hard material layer (10) can be mounted on the snapping roll (1, 2) ahead in the direction of movement.

2. Cutting element according to Claim 1, **characterized in that** the hard material layer (10) is thicker at both ends of the cutting element (8) than in the middle region of the cutting element (8) and **in that** the cutting element (8), selectively with its one or its other end, can be mounted on the snapping roll (1, 2) ahead in the direction of movement.

3. Cutting element according to either Claim 1 or 2, **characterized in that** the cutting element (8) has two parallel cutting edges (11) and in the region of these cutting edges (11) is provided with hard material layers (10), which vary over the length of the cutting edges (11) and are thicker at at least one end of the region of each cutting edge (11) than in the middle region of the cutting element (8) and **in that** the cutting element (8) with each of its ends having the thicker hard material layer (10) can be mounted on the snapping roll (1, 2) ahead in the direction of movement.

4. Cutting element according to any one of Claims 1 to 3, **characterized in that** the ratio of the minimum thickness (d3) to the maximum thickness (d1, d2) of the hard material layer (10) is between 1:1.5 and 1:5, preferably 1:2.5.

5. Cutting element according to any one of Claims 1 to 4, **characterized in that** the hard material layer (10) consists of several layers (10a, 10b, 10c) arranged one over the other with uniform thickness in the longitudinal direction of the cutting element (8) and **in that** the number of layers (10a, 10b, 10c) varies over the length of the cutting element (8).

6. Cutting element according to any one of the preceding claims, **characterized in that** the hard material layer (10) is a hard material strip (10) fixed on the base or in a groove in the base of the cutting element (8) with thickness (d1, d2, d3) varying over the length.

7. Snapping roll for harvesting stalk crops, with at least one cutting element, which is provided with a hard material layer in the region of its cutting edge, **characterized in that** the thickness (d1, d2, d3) of the hard material layer (10) varies over the length of the cutting element (6, 8) and is thicker at at least one end of the cutting element (6, 8) than in the middle region of the cutting element (6, 8) and **in that** the cutting element (6, 8) with its end having the thicker hard material layer (10) is arranged on the snapping roll (1, 2) ahead in the direction of movement.

8. Snapping roll according to Claim 7, **characterized in that** the hard material layer (10) is thicker at both ends of the cutting element (8) than in the middle region of the cutting element (8) and **in that** the cutting element (8), selectively with its one or its other end, can be mounted on the snapping roll (2) ahead in the direction of movement.

9. Snapping roll according to Claim 7, **characterized in that** the cutting element (6) is integral with the snapping roll (1) and **in that** the snapping roll (1) with the end having a thicker hard material layer (10) can be mounted ahead in the direction of movement.

10. Snapping roll according to Claim 7 or 8, wherein the cutting element has two parallel cutting edges and in the region of these cutting edges is provided with hard material layers, **characterized in that** the hard material layers (10) vary over the length of the cutting edges (11) and are thicker at at least one end of the region of each cutting edge (11) than in the middle region of the cutting element (8) and **in that** the cutting element (8) with each of its ends having the thicker hard material layer (10) can be mounted on the snapping roll (2) ahead in the direction of movement.

11. Snapping roll according to any one of Claims 7 to 10, **characterized in that** the ratio of the minimum thickness (d3) to the maximum thickness (d1, d2) of the hard material layer (10) is between 1:1.5 and 1:5, preferably 1:2.5.

12. Snapping roll according to any one of Claims 7 to 11, **characterized in that** the hard material layer (10) consists of several layers (10a, 10b, 10c) arranged one over the other with uniform thickness in the longitudinal direction of the cutting element (8) and **in that** the number of layers (10a, 10b, 10c) varies over the length of the cutting element (8).

13. Snapping roll according to any one of Claims 7 to 12, **characterized in that** the hard material layer (10) is a hard material strip (10) fixed on the base or in a groove in the base of the cutting element (8) with thickness (d1, d2, d3) varying over the length.

## Revendications

1. Élément coupant pour un rouleau cueilleur destiné à récolter du produit de récolte en tiges, lequel élément coupant comporte au moins une arête de coupe et est pourvu, dans la zone de cette arête de coupe, d'un revêtement de matière dure, **caractérisé en ce que** l'épaisseur (d1, d2, d3) du revêtement de matière dure (10) varie sur la longueur de l'élément coupant (8) et est plus grande à au moins une extrémité de l'élément coupant (8) que dans la zone centrale de l'élément coupant (8), et **en ce que** l'élément coupant (8) peut être monté sur le rouleau cueilleur (1, 2) en orientant son extrémité pourvue du revêtement de matière dure plus épais (10) vers l'avant par rapport à la direction de déplacement.

2. Élément coupant selon la revendication 1, **caractérisé en ce que** le revêtement de matière dure (10) est plus épais aux deux extrémités de l'élément coupant (8) que dans la zone centrale de l'élément coupant (8), et **en ce que** l'élément coupant (8) peut être monté sur le rouleau cueilleur (1, 2) en orientant au choix l'une ou l'autre de ses extrémités vers l'avant par rapport à la direction de déplacement.

3. Élément coupant selon une des revendications 1 ou 2, **caractérisé en ce que** l'élément coupant (8) comporte deux arêtes de coupe parallèles (11) et est pourvu, dans la zone de chacune de ces arêtes de coupe (11), d'un revêtement de matière dure (10) qui varie sur la longueur des arêtes de coupe (11) et est plus épais à au moins une extrémité de la zone de chaque arête de coupe (11) que dans la zone centrale de l'élément coupant (8), et **en ce que** l'élément coupant (8) peut être monté sur le rouleau cueilleur (1, 2) en orientant chacune de ses extrémités pourvues du revêtement de matière dure plus épais (10) vers l'avant par rapport à la direction de déplacement.

4. Élément coupant selon une des revendications 1 à 3, **caractérisé en ce que** le rapport de l'épaisseur minimale (d3) à l'épaisseur maximale (d1, d2) du revêtement de matière dure (10) est compris entre 1:1,5 et 1:5, de préférence est de 1:2,5.

5. Élément coupant selon une des revendications 1 à 4, **caractérisé en ce que** le revêtement de matière dure (10) est constitué de plusieurs couches superposées (10a, 10b, 10c) possédant une épaisseur constante dans la direction longitudinale de l'élément coupant (8), et **en ce que** le nombre de couches (10a, 10b, 10c) varie sur la longueur de l'élément coupant (8).

6. Élément coupant selon une des revendications précédentes, **caractérisé en ce que** le revêtement de matière dure (10) est une barrette de matière dure (10) qui est disposée sur le corps de base ou dans une rainure du corps de base de l'élément coupant (8) et dont l'épaisseur (d1, d2, d3) varie sur la longueur.

7. Rouleau cueilleur pour récolter du produit de récolte en tiges, comprenant au moins un élément coupant pourvu, dans la zone de son arête de coupe, d'un revêtement de matière dure, **caractérisé en ce que** l'épaisseur (d1, d2, d3) du revêtement de matière dure (10) varie sur la longueur de l'élément coupant (6, 8) et est plus grande à au moins une extrémité de l'élément coupant (6, 8) que dans la zone centrale de l'élément coupant (6, 8), et **en ce que** l'élément coupant (6, 8) peut être monté sur le rouleau cueilleur (1, 2) en orientant son extrémité pourvue du revêtement de matière dure plus épais (10) vers l'avant par rapport à la direction de déplacement.

8. Rouleau cueilleur selon la revendication 7, **caractérisé en ce que** le revêtement de matière dure (10) est plus épais aux deux extrémités de l'élément coupant (8) que dans la zone centrale de l'élément coupant (8), et **en ce que** l'élément coupant (8) peut être monté sur le rouleau cueilleur (2) en orientant au choix l'une ou l'autre de ses extrémités vers l'avant par rapport à la direction de déplacement.

9. Rouleau cueilleur selon la revendication 7, **caractérisé en ce que** l'élément coupant (6) est réalisé d'un seul tenant avec le rouleau cueilleur (1), et **en ce que** le rouleau cueilleur (1) peut être monté en orientant l'extrémité pourvue d'un revêtement de matière dure plus épais (10) vers l'avant par rapport à la direction de déplacement.

10. Rouleau cueilleur selon la revendication 7 ou 8, **caractérisé en ce que** l'élément coupant comporte deux arêtes de coupe parallèles et est pourvu, dans la zone de chacune de ces arêtes de coupe, d'un revêtement de matière dure, **caractérisé en ce que** les revêtements de matière dure (10) varient sur la longueur des arêtes de coupe (11) et sont plus épais à au moins une extrémité de la zone de chaque arête de coupe (11) que dans la zone centrale de l'élément coupant (8), et **en ce que** l'élément coupant, (8) peut être monté sur le rouleau cueilleur (2) en orientant chacune de ses extrémités pourvues du revêtement de matière dure plus épais (10) vers l'avant par rapport à la direction de déplacement.

11. Rouleau cueilleur selon une des revendications 7 à 10, **caractérisé en ce que** le rapport de l'épaisseur minimale (d3) à l'épaisseur maximale (d1, d2) du revêtement de matière dure (10) est compris entre 1:1,5 et 1:5, de préférence est de 1:2,5.

12. Rouleau cueilleur selon une des revendications 7 à 11, **caractérisé en ce que** le revêtement de matière dure (10) est constitué de plusieurs couches superposées (10a, 10b, 10c) possédant une épaisseur constante dans la direction longitudinale de l'élément coupant (8), et **en ce que** le nombre de couches (10a, 10b, 10c) varie sur la longueur de l'élément coupant (8).

13. Rouleau cueilleur selon une des revendications 7 à 12, **caractérisé en ce que** le revêtement de matière dure (10) est une barrette de matière dure (10) qui est disposée sur le corps de base ou dans une rainure du corps de base de l'élément coupant (8) et dont l'épaisseur (d1, d2, d3) varie sur la longueur.
